# EUROPEAN PATENT SPECIFICATION

(11) **EP 3 322 955 B1**
(45) Date of publication and mention of the grant of the patent: **19.06.2019**
(21) Application number: 16775672.5
(22) Date of filing: 29.09.2016
(51) Int. Cl.: F28D 20/00

(54) **HEAT EXCHANGE SYSTEM WITH CONSTANT ENERGY CONSUMPTION AND METHOD FOR EXCHANGING HEAT BY USING THE HEAT EXCHANGE SYSTEM**
WÄRMEAUSTAUSCHSYSTEM MIT KONSTANTEM ENERGIEVERBRAUCH UND VERFAHREN ZUM AUSTAUSCHEN VON WÄRME UNTER VERWENDUNG DES WÄRMEAUSTAUSCHSYSTEMS
SYSTÈME D'ÉCHANGE DE CHALEUR AVEC CONSOMMATION D'ÉNERGIE CONSTANTE ET PROCÉDÉ D'ÉCHANGE DE CHALEUR UTILISANT LE SYSTÈME D'ÉCHANGE DE CHALEUR

(30) Priority: 30.09.2015 EP 15187737
(43) Date of publication of application: 23.05.2018
(73) Proprietor: Siemens Gamesa Renewable Energy A/S, 7330 Brande (DK)
(72) Inventor: BARMEIER, Till Andreas, 20259 Hamburg (DE); SEIDEL, Volker, 08014 Barcelona (ES)
(74) Representative: Aspacher, Karl-Georg
(86) International application number: PCT/EP2016/073244
(87) International publication number: WO 2017/055440

(56) References cited:
- WO-A1-2008/108870
- WO-A1-2014/003577
- WO-A1-2016/050367
- WO-A2-2012/148997
- US-A1- 2008 066 736

## Description

### BACKGROUND OF THE INVENTION

### 1. FIELD OF THE INVENTION

The present invention refers to a heat exchange system with constant energy consumption and a method for exchanging heat by using the heat exchange system.

### 2. DESCRIPTION OF THE RELATED ART

Despite the integration of renewable energy into the public electric energy system (power grid) a large share of electricity is nowadays still generated by fossil energy sources. But the global climate change requires the further development of renewable energies.

The energy output of renewable energy sources like wind and solar is not constant throughout a day or throughout a year. Consequently, electricity which is generated by utilizing energy from renewable energy sources fluctuates.

In order to manage this fluctuating electricity, heat (thermal energy) storage systems are developed for storing and releasing thermal energy (heat exchange system). Such a heat exchange system comprises a heat exchange chamber with heat exchange chamber boundaries which surround a heat exchange chamber interior. The heat exchange chamber interior is filled with heat storage material like stones. The heat exchange chamber boundaries comprise a first opening for guiding an inflow of a heat transfer fluid, e.g. air, into the heat exchange chamber interior and a second opening for guiding out an outflow of the heat transfer fluid out of the heat exchange chamber interior.

For a charging mode, the heat exchange system additionally comprises a charging unit for heating the heat transfer fluid with the aid of excess electricity. The resulting hot heat transfer fluid is infused into the heat exchange chamber interior via one of the openings (e.g. first opening) of the heat exchange chamber boundaries. This opening defines a "hot" terminal of the heat exchange chamber. The hot heat transfer fluid is guided through the heat exchange chamber interior. By the guiding of the hot heat transfer fluid through the heat exchange chamber interior a heat transfer from the heat transfer fluid to the heat storage material is caused. Heat is stored by the heat storage material.

Via the other opening (second opening) of the heat exchange chamber the resulting "cold" heat transfer fluid is guided out of the heat exchange chamber interior. Thereby, this opening of the heat exchange chamber boundaries defines a "cold" terminal (end) of the heat exchange chamber. The charging mode is stopped when the temperature at the cold terminal of the heat exchange chamber begins to rise above a predetermined temperature.

In a discharging mode of the heat exchange chamber this stored heat can be recovered: "cold" heat transfer fluid is infused into the heat exchange chamber interior via the first opening of the heat exchange chamber boundaries. In this case, the first opening defines a "cold" terminal. The cold heat transfer fluid is guided through the hot heat exchange chamber interior. By the guiding of the cold heat transfer fluid through the heat exchange chamber interior a heat transfer from the heat storage material to the heat transfer fluid is caused. Heat is released from the heat storage material.

Via the second opening of the heat exchange chamber boundaries the resulting "hot" heat transfer fluid is guided out of the heat exchange chamber interior. Thereby, the second opening of the heat exchange chamber defines a "hot" terminal of the heat exchange chamber.

The resulting hot heat transfer fluid can be used for generating steam with which a steam turbine is driven. Result of the described discharging mode: Heat is transformed back to electricity.

The discharging mode is stopped when the temperature at the cold terminal of the heat exchange storage begins to drop below a certain temperature.

A forecast of the amount of the energy output of renewable energy sources is pretty difficult. Hence, the providing of suitable heat exchange system is difficult, too.

The relatively simple link between the stop of the charging mode and the temperature increase at the cold terminal of the heat exchange chamber as well as the relatively simple link between the stop of the discharging mode and the temperature decrease at the cold terminal of the heat exchange chamber causes a poor exploitation of a heat storage capacity of the heat exchange system.

The documents WO 2014/003577 A1, disclosing a heat exchange system according to the preamble of claim 1, as well as WO 2008/108870 A1, WO 2008/108870 A1, US 2008/0066736 A1, and WO 2012/148997 A2 all show heat exchange systems integrated in solutions for taking advantage of solar power. Required components for guiding the heat to the heat exchange system are shown, with the goal to store the heat. Furthermore components to extract the heat from the heat exchange system are also shown in the mentioned documents, so that power can be generated from the stored heat.

### SUMMARY OF THE INVENTION

It is an objective of the invention to provide a heat exchange system for flexibly storing (absorbing) energy and for flexibly releasing the stored (absorbed) energy.

This objective is achieved by the invention specified in the claims.

A heat exchange system with at least one heat exchange chamber is provided. The heat exchange chamber comprises heat exchange chamber boundaries which surround at least one heat exchange chamber interior of the heat exchange chamber. The heat exchange chamber boundaries comprise at least one first opening for guiding in an inflow of at least one heat transfer fluid into the heat exchange chamber interior and at least one second opening for guiding out an outflow of the heat transfer fluid out of the heat exchange chamber interior. At least one heat storage material is arranged in the heat exchange chamber interior such that a heat exchange flow of the heat transfer fluid through the heat exchange chamber interior causes a heat exchange between the heat storage material and the heat transfer fluid. The heat exchange system is equipped with at least one flow adjusting element for adjusting a mass flow of the heat exchange flow of the heat transfer fluid through the heat exchange chamber interior depending on a heat charge status of the heat exchange system. The heat status of the heat exchange system is monitored and based on the monitored heat status an amount of the heat exchange is controlled.

In addition to the heat exchange system, a method for exchanging heat by using the heat exchange system is provided. In an operating mode of the heat exchange system the heat exchange flow of the heat transfer fluid is guided through the heat exchange chamber interior, wherein a heat exchange between the heat storage material and the heat transfer fluid is caused and a mass flow of the heat exchange flow of the heat transfer fluid is adjusted depending on the heat charge status of the heat exchange system.

The heat exchange chamber is a space, cavity or a housing in which the heat storage material is located. Inside of the heat exchange chamber the heat exchange takes place. In order to provide an efficient heat exchange, the heat exchange chamber is preferably thermally insulated against the surroundings. The loss of heat is reduced by the thermal insulation.

The heat transfer fluid is guided (led) into the heat exchange chamber interior via the first opening and is guided out of the heat exchange chamber interior via the second opening. The first opening of the heat exchange chamber boundaries is an inlet opening. The second opening of the heat exchange chamber boundaries is an outlet opening. Thus, there are different areas of the heat exchange chamber boundaries, namely an inlet area of the heat exchange chamber boundaries with the first opening and an outlet area of the heat exchange chamber boundaries with the second opening.

The heat charge status of the heat exchange system describes a ratio between a current absorbed heat by the heat exchange system and the maximal possible absorbed heat by the heat exchange system.

In a preferred embodiment, the heat exchange system is equipped with at least one heat charge status determining device for determining the heat charge status of the heat exchange system.

Preferably, the heat charge status determining device comprises at least one temperature measuring device for measuring at least one temperature of the heat exchange system. The determining of the heat charge status of the heat exchange system is carried out by measuring of at least one temperature of the heat exchange system. Preferably, such a temperature measuring device is a thermocouple. The thermocouple is a temperature measuring device which is based on the Seebeck effect. Alternatively, the temperature measuring device is based on electrical resistance.

In this context it is advantageous to use a number of such temperature measuring devices. Preferably, these temperature measuring devices are distributed over the heat exchange chamber or over the complete heat exchange system. Preferably, the temperature which has to be measured is selected from the group consisting of temperature of the inflow of the heat transfer fluid and temperature of the outflow of the heat transfer fluid. This can be carried out at the respective opening or at the respective area of the heat exchange chamber boundaries.

The operating mode of the heat exchange system is selected from the group consisting of charging mode with a heat transfer from the heat transfer fluid to the heat storage material and discharging mode with a heat transfer from the heat storage material to the heat transfer fluid.

Preferably, during the charging mode of the heat exchange system the heat exchange flow is directed in a charging mode direction through the heat exchange chamber interior of at least one of the heat exchange chambers; during a discharging mode the heat exchange flow is directed in a discharging mode direction through the heat exchange chamber interior of at least one of the heat exchange chambers; and the charging mode direction and the discharging mode direction are opposed to each other.

Depending on the operating mode, a specific opening can have the function of the first opening (inlet opening) or the function of the second opening (outlet opening). The flow direction of the heat exchange flow depends on the operating mode. Preferably, during the charging mode the heat exchange flow is directed in a charging mode direction, during the discharging mode the heat exchange flow is directed in a discharging mode direction and the charging mode direction and the discharging mode direction are opposed to each other (countercurrent operation). But, a change of the directions of the heat exchange flow is not necessary. Charging mode direction and discharging mode direction comprise the same direction (co-current operation).

In countercurrent operation, switching from the charging mode to the discharging mode the direction of the heat exchange flow through the heat exchange chamber interior is reversed and consequently, the function of the openings (inlet opening, outlet opening) is reversed, too. With such a solution it is especially advantageous to use the same heat transfer fluid for the charging mode and for the discharging mode. But of course, different heat transfer fluids for the charging mode and the discharging mode can be used, too.

In accordance with the invention, when the operating mode is the charging mode, for the charging mode a charging unit for heating the heat transfer fluid is used and an energy consumption of the heat exchange system during the charging mode is kept approximately constant. This refers to all energy consuming elements of the charging unit. Variations of up to 10% are possible. Preferably, the energy consumption of the complete heat exchange system is kept constant. Thereby, the key energy consumers (biggest consumers of energy) are taken into consideration, especially the charging unit, e.g. electrical heater, or the flow adjusting element, e.g. blowers. But additional energy consumers of the heat exchange system, e.g. control systems, temperature measuring devices, etc., can be taken into consideration, too.

For the charging mode, the heat exchange system is equipped with at least one charging unit for heating the heat transfer fluid. In the charging mode with activated charging unit, the charging unit can be located upstream of the heat exchange chamber. In contrast to that, in the discharging mode with a deactivated charging unit, the charging unit can be located downstream of the heat exchange chamber.

In a preferred embodiment, the heat exchange system is equipped with a calorimetric flow meter which comprises upstream and downstream of the charging unit temperature measuring devices. In order to estimate the mass flow of the heat transfer fluid it is enough to combine temperature measuring devices for detecting the temperature of the heat transfer fluid upstream and downstream of the charging unit. So, the flow meter comprises a combination of different, maybe already installed, temperature measuring devices. Based on the difference of the measured temperatures before and after the heat charging unit and dependent on absorbed power of the heat transfer fluid of energy of the charting unit it is possible to estimate the mass flow of the heat transfer fluid.

Preferably, the charging unit comprises at least one electrical heating device which is selected from the group consisting of resistance heater, inductive heater, emitter of electromagnetic radiation and heat pump. The electromagnetic radiation is preferably infrared radiation. A combination of different electrical heating devices is possible. With the aid of the electrical heating devices electricity is transformed into heat. This heat is absorbed by the heat transfer fluid and transported to the heat storage material in the heat exchange chamber interior.

For instance, the electrical heating device comprises a resistance heater. This heater is located in the heat exchange inflow upstream of the heat exchange chamber. The heat transfer fluid is heated up before its entering of the heat exchange chamber interior. The resistance heater comprises a large heat exchange area for an efficient heat exchange from the resistance heater to the heat transfer fluid. For instance, the large heat exchange area is formed by a grid of the resistance heater. A meander shaped resistance heater is possible, too. With such a measure, the heat transfer to the heat transfer fluid is enhanced. In addition, the possibility of the (not desired) occurrence of hot spots within the resistance heater is reduced.

In a further preferred embodiment, the operating mode is the discharging mode, for the discharging mode a discharging unit for removing heat from the heat transfer fluid is used and an electricity production of the discharging unit during the discharging mode is kept approximately constant. Variations of up to 10% are possible.

The heat exchange system is preferably equipped with at least one discharging unit for discharging the heat transfer fluid of the outflow from heat for production of electricity. Heat is removed from the heat transfer fluid after the leave of the heat transfer fluid from the heat exchange chamber interior. The removed heat is transformed into electricity. In a preferred embodiment, the transformation of heat into electricity is carried by a water/steam cycle for driving a turbine of a steam power plant.

The discharging mode can be realized when electricity prices and demand are high or when the production of renewable energies is low. For that and in order to limit the costs which are connected to the invention, it is advantageous to use existing power plants. So, the thermal energy exchange system can be a kind of retrofit system. For instance, well suited are CCPP (combined cycle power plant) since their heat recovery steam generator (HRSG) is similar to the application proposed here. Nevertheless, hard coal, oil, gas, waste incineration, biomass, wood or lignite fired power plants can be used since the charging unit can be designed for high temperatures to match the temperatures used in the steam generator. In a hybrid mode the fuel can be used to increase the temperature from the temperature level of the heat exchange system to the operating temperature of the original furnace or boiler design.

In a preferred embodiment, the heat exchange system is equipped with at least one flow meter for determining the mass flow of the heat transfer flow of the heat transfer fluid through the heat exchange chamber interior and/or for determining a mass flow of the inflow of the heat transfer fluid into the heat exchange chamber interior and/or for determining a mass flow of the outflow of the heat transfer fluid out of the heat exchange chamber interior. Preferably, the flow meter comprises a function of a calorimetric flow meter. With the aid of the flow meter it is possible to control the mass flow of the heat transfer fluid. By controlling the mass flow of the heat transfer fluid it is possible to control the intensity of the heat exchange in the heat exchange chamber interior. More important for the charging mode: The energy consumption of the charging unit can be kept constant.

Concerning the invention, the mass flow of the heat transfer fluid through the heat exchange chamber interior depends on the heat charge status. The mass flow is adjustable. For that, the flow adjusting element is used. In a preferred embodiment, the flow adjusting element comprises at least one active fluid motion device which is selected from the group consisting of blower, fan and pump and/or the flow adjusting element comprises at least one passive fluid control device which is selected from the group consisting of activatable bypass pipe, nozzle, flap, damper and valve. A multitude of these devices are possible as well as a combination of these devices. In addition, flow adjusting elements can be arranged serially or in parallel. For instance, two flaps are arranged at two openings in order to adjust the inflows of the heat transfer fluid into the heat exchange chamber interior and consequently in order to adjust the temperature distribution in the heat exchange chamber interior.

The advantage of passive fluid control devices is that they are cheap. In addition, passive fluid control devices are very reliable. But preferably, active fluid motion devices are used. In that case, it is advantageous that driving units of the active fluid motion devices like electrical motors and electrical equipment are located outside of the heat exchange flow with the (possibly very hot) heat transfer fluid.

Just to be noted: There are different locations for the flow adjusting element possible. The flow adjusting element can be directly arranged in the heat exchange chamber, downstream of the heat exchange chamber and/or upstream of the heat exchange chamber. The location depends - inter alia - on the kind of flow adjusting element (active fluid motion device or passive fluid control device).

The heat storage material can be liquid and/or solid. For instance, a core of the heat storage material is solid and a coating of this solid core is liquid. Such a liquid coating can comprise ionic liquid.

The solid material comprises preferably bulk material. Mixtures of different liquid materials and different solid materials are possible as well as mixtures of liquid and solid materials.

It is possible that the heat storage material is a thermo-chemical energy storage material: Thermal energy can be stored via an endothermic reaction whereas thermal energy can be released via an exothermic reaction. Such a thermo chemical storage material is for instance the calcium oxide/calcium hydroxide system.

The heat storage materials can be arranged in one or more specific containers made of non-reactive container material. Non-reactive means that no chemical reaction between the heat storage material and the container material takes place during the heat exchange process.

In a preferred embodiment, the heat storage material comprises at least one chemically and/or physically stable material. In the range of the operational temperature of the heat exchange system the heat storage material does not change its physical and/or chemical properties. A physically stable material does not change its physical properties during the heat exchange. For instance, the heat storage material remains in a solid state in the operating temperature range. A chemically stable material does not change its chemical composition during the heat exchange. For instance, such a chemically stable material is a phase change material (PCM).

Moreover, a complex heat exchange system with different heat exchange chambers with different heat storage materials and/or different heat transfer fluids is possible, too. For Instance, a heat exchange chamber with stones as heat storage material and a heat exchange chamber with a phase change material as a heat storage material are combined together (in parallel or in series).

In a preferred embodiment, the heat storage material comprises sand and/or stones. The stones can be natural stones or artificial stones. Mixtures thereof are possible, too. Artificial stones can consist of containers which are filled with heat storage material. This heat storage material is for instance a phase change material or a thermo-chemical storage material (see above).

Preferably, the stones comprise gravel (pebbles), rubbles and/or grit (splits). The artificial material comprises preferably clinkers or ceramics. Again, mixtures of the mentioned materials are possible, too.

In order to provide a cheap energy storage material it is advantageous to use waste material. Therefore, in a preferred embodiment, the artificial material comprises at least one by-product of an industrial process. For instance, the by-product is iron silicate. Iron silicate origins from a slag of copper production.

In a preferred embodiment, heat exchange channels are embedded in the heat storage material for guiding of the heat exchange flow through the heat exchange chamber interior. The heat storage material forms a heat exchange bed. The heat exchange bed comprises the heat exchange channels. The heat exchange channels are embedded into the heat storage bed such that the heat exchange flow of the heat transfer fluid through the heat exchange channels causes the heat exchange between the heat storage material and the heat transfer fluid. The heat exchange channels can be formed by interspaces (gaps) of the heat storage material. For instance, the heat storage material comprises stones. The stones form the heat exchange bed with the heat exchange channels. In addition or alternatively, the heat storage material is porous. Open pores of the heat storage material form the heat exchange channels.

The heat transfer fluid is selected from the group consisting of a liquid and a gas. The gas is selected from the group consisting of inorganic gas and/or organic gas. The inorganic gas is preferably air. Mixtures of different liquids are possible as well as mixtures of different gases.

Preferably, the heat transfer fluid comprises a gas at ambient gas pressure. Preferably, the gas at the ambient pressure is air. The ambient pressure (900 hPa to 1.100 hPa) varies such that the heat exchange flow through the heat exchange chamber interior is caused.

For the guiding of the heat transfer fluid into the heat exchange chamber interior and for the guiding of the heat transfer fluid out of the heat exchange chamber interior a pipe system (or channel system, ducting system) is used. This pipe system can be closed (with a closed loop) or can be open (with an open loop).

For instance the heat transfer fluid is ambient air of the environment. The loop is an open loop. Air from the environment is introduced into the heat exchange system and air of the heat exchange system is released to the surroundings. There is an air exchange during the operation of the heat exchange system.

In contrast to that, there is no air exchange or a selectively adjustable air exchange during the operation in a closed loop. Air of the environment is not added or just added on a small scale to the air which is used as heat transfer fluid. Alternatively or in addition, the added air is used for a pressure compensation which is caused by the warming of the heat transfer fluid. This has following specific advantage: In a situation with almost completely charged heat storage material, heat transfer fluid with remaining heat would be released to the environment in an open loop. The remaining heat is lost. In contrast to that, in a closed loop this heat transfer fluid with remaining heat stays in heat exchange system. The remaining heat is not lost. Therefore, in a preferred embodiment, a closed loop is implemented and wherein the inflow comprises the outflow. The outflow is guided back into the heat exchange chamber interior.

The heat exchange chamber is a vertical heat exchange chamber and/or a horizontal heat exchange chamber.

The term "horizontal heat exchange chamber" implies a horizontal main (average) flow of the heat transfer fluid through the heat exchange chamber interior. The flow direction of the horizontal main flow is essentially parallel to the average surface of the earth. The horizontal direction is essentially a perpendicular direction to the direction of the gravity force which affects the heat transfer fluid. Perpendicular means in this context that deviations from the perpendicularity of up to 20° and preferably deviations of up to 10° are possible.

A horizontally oriented direction of the heat exchange flow can be achieved by lateral first openings and/or lateral second openings. The horizontal heat exchange chamber comprises these openings in its side heat exchange chamber boundaries. In addition, with the aid of an active fluid motion device like a blower or a pump the heat exchange flow in the heat exchange chamber interior is caused. The heat transfer fluid is blown or pumped into the heat exchange chamber interior or is pumped or sucked out of the heat exchange chamber interior.

In contrast to the term "horizontal heat exchange chamber", the term "vertical heat exchange chamber" implies a vertical main flow of the heat transfer fluid through the heat exchange chamber interior. For instance, the operating mode is the charging mode. In a vertical heat exchange chamber the heat exchange flow is preferably directed downwards (top down) during the charging mode. The vertical main flow (essentially parallel but in the opposite direction to the direction of gravity force) can be caused by an active fluid motion device (blower or pump). The first opening is located at a top of the heat exchange chamber and the second opening is located at a bottom of the heat exchange chamber.

Based on natural convection, in a vertical heat exchange chamber the temperature of the heat storage material along a cross section perpendicular to the flow direction of the heat transfer fluid is approximately the same (horizontal isothermal lines).

In contrast to that, in a horizontal heat exchange chamber due to natural convection the temperature of the heat storage material along the cross section perpendicular to the flow direction of the heat transfer fluid (see below) can differ (inclined isothermal lines).

It has to be noted that the terms "horizontal" and "vertical" are independent from the dimensions of the heat exchange chamber and its orientation. Decisive is the direction of the flow of the heat transfer fluid through the heat exchange chamber interior. For instance, a "horizontal heat exchange chamber" can have a chamber length which is less than the chamber height of the heat exchange chamber.

Besides pure vertical and horizontal heat exchange chambers, a mixture of "vertical heat exchange chamber" and "horizontal heat exchange chamber" is possible, too. In such a heat exchange chamber, the main flow of the heat transfer fluid is the result of horizontal and vertical movement of the heat transfer fluid through the heat exchange chamber interior.

In a preferred embodiment, at least two first openings are arranged vertically to each other and/or at least two second openings are arranged vertically to each other. Openings are arranged above each other. By this measure it is possible to influence a vertical distribution of heat exchange flows in order to improve a temperature distribution (temperature front) in the heat storage material and heat exchange chamber interior respectively. Isothermal lines perpendicular to the flow direction are influenced. This can be alternatively or in addition supported by respective flow adusting elements.

The temperature front is defined by neighboring cold and hot areas of the heat storage material in the heat exchange chamber interior caused by the flow of the heat transfer fluid through the heat exchange chamber interior. The temperature front is aligned perpendicular to the respective flow direction of the heat exchange flow through the heat exchange chamber. During the charging mode the heat exchange flow is directed in a charging mode direction wherein the temperature front moves along this charging mode direction. In contrast to that, during the discharging mode the heat exchange flow is directed in the discharging mode direction (opposite to the charging mode direction) wherein the temperature front moves along the discharging mode direction. In both cases, the temperature front of the heat exchange chamber is migrating through the heat exchange chamber to the respective hot/cold ends of the heat exchange chamber. It is to be noted that in case of countercurrent operation, the hot (hot opening) end remains the hot end (hot opening), independently from the mode (charging mode or discharging mode).

The temperature front is a zone of strong temperature gradient in the heat storage material, i.e. high temperature difference between hot and cold areas. In this application it separates the hot (charged with heat) and the cold (not charged) zone in the heat exchange chamber with the heat storage material. The temperature front develops due to the transfer of heat from the heat transfer fluid to the heat storage material during the charging mode and due to the transfer of heat from the heat storage material to the heat transfer fluid during the discharging mode. Isothermal zones/lines develop ideally (e.g. without the influence of gravitation) perpendicular to the main flow direction, i.e. zones/lines of constant temperature.

In order to optimize the efficiency of the heat exchange system it is advantageous to ensure a uniform temperature front. There are just small variations concerning the temperature gradients perpendicular to the flow direction. In a vertical heat exchange chamber with a flow direction top down, the temperature front is nearly uniform due to natural convection. So, in this case additional measures are not necessary. In contrast to that, natural convection leads to a nonuniform temperature front in a horizontal heat exchange chamber. So, in this case additional measures could be meaningful (like usage of more openings or usage of more flow adjusting elements).

Preferably, the chamber boundary with one of the openings comprises a transition area with a tapering profile such that an opening diameter of the opening aligns to a first tapering profile diameter of the tapering profile and a chamber diameter of the heat exchange chamber aligns to a second tapering profile diameter of the tapering profile. The transition area comprises an increasing cross section from the respective opening towards the heat exchange chamber. This is especially advantageous for the first opening for guiding the heat transfer fluid into the heat exchange chamber. The diameter of the transition area expands from the opening diameter of the first opening to the diameter of the heat exchange chamber. With the aid of the tapering profile the inflow of the heat transfer fluid is guided into the heat exchange chamber interior. The guided inflow is distributed to a wide area with the heat storage material. By this measure a capacity of the heat exchange unit (heat storage material which is located in the heat exchange chamber) can be highly exploited. In addition, the efficiency of the heat exchange can be improved by adapting the heat exchange flow. Remark: For additionally adapting the heat exchange flow, a diffuser can be located at the first opening, especially in the transition area. By means of the diffuser an incident flow of the heat transfer fluid into the heat exchange chamber interior can be adjusted. For instance, such a diffuser is formed by stones which are located in the transition area with the tapering profile.

For the case that the heat exchange chamber comprises a number of first openings it is very advantageous to arrange a described transition area at that number of first openings. Thereby, the first openings can comprise a joint transition area or individual transition areas.

The transition area with the second opening for guiding the heat transfer fluid out of the heat exchange chamber interior can be tapered, too. By this measure the guiding of heat flow out of the heat exchange chamber interior of the heat exchange chamber is simplified.

In this context, the use of a short transition area is very advantageous. For instance, the short transition area comprises a dimension which is less than 50% of a length of the heat exchange chamber. For instance, the dimension is about 20% of the length of the heat exchange chamber. The length is the dimension of the heat exchange chamber that is parallel to the main flow direction of the heat transfer fluid through the heat exchange chamber interior. But of course, the dimension of the transition area is dependent on a number of features of the complete heat exchange system, e.g. temperature of the heat transfer fluid, mass flow of the heat exchange flow, speed of the heat exchange flow at the relevant opening temperatures, etc.

In order to save space and in order to reduce the surface-volume ratio for a reduced heat loss, it is advantageous to implement a transition area as short as possible. The result is a short transition channel for guiding the inflow into the heat exchange chamber interior. Besides an efficient usage of the capacity of the heat exchange chamber a low space requirement is connected to this solution.

Preferably, the heat exchange chamber comprises a cylindrically shaped chamber boundary. For instance, the chamber boundary which comprises the first opening is formed as a circular cylinder and/or the chamber boundary with the second opening is formed as a circular cylinder. Such shapes lead to best surface-volume ratios.

Concerning the dimensions of the heat exchange system, the heat exchange chamber can comprise large dimensions. Preferably, a length of the heat exchange chamber is selected from the range between 20 m - 250 m, a width of the heat exchange chamber is selected from the range between 20 m - 250 m and a height of heat exchange chamber is selected from the range of 10 m - 100 m.

In a preferred embodiment, that heat exchange system comprises at least one particle filter or other means to remove particles from the heat transfer fluid, for instance a cyclone particle remove system. The removing of particles servers the purpose of efficient heat transfer, avoid deposition of the particles, avoid cloaking and avoid possible fires. It is possible to use such a particle filter just for commissioning purposes. In this case, after the initial operation the particle filter is removed.

The heat exchange system is especially adapted for operation at high temperatures of more than 300 °C. Therefore, in a preferred embodiment, an operating temperature of the operating mode is selected from the range between 300 °C and 1000 °C, preferably selected from the range between 500 °C and 1000 °C, more preferably selected from the range between 600 °C and 1000 °C, 650 °C to 1000 °C and most preferably between 700 °C and 1000 °C. A deviation of the temperature ranges is possible. In this context, very advantageous is an upper limit of the temperature range of 900 °C and most preferably an upper limit of the temperature range of 800 °C. The heat exchange system is a high temperature heat exchange system.

The proposed invention can be applied for renewable energy production as well as for conventional energy production. For instance, in order to increase the flexibility the steam cycle of fossil fired power plants (or nuclear power plants, etc.) it can be combined with the heat exchange system proposed here. In this case, the boiler of the steam cycle of the power plant can be operated with fuel when fuel costs are lower than electricity costs and the heat exchange system is charged in periods when electricity prices are low. Alternatively, the charging can take place during a period of excess production of energy.

With the invention following specific advantages are achieved:
- The heat charge status of the heat exchange system is monitored and based on the monitored heat charge status an intensity of the exchanged heat is controlled with the aid of the flow adjusting element.
- It is possible to keep the overall energy consumption of the charging unit during the charging mode of the heat exchange system approximately constant.
- During the discharging mode of the heat exchange system the electricity production of the discharging unit can be kept approximately constant.

### BRIEF DESCRIPTION OF THE DRAWINGS

Further features and advantages of the invention are produced from the description of exemplary embodiments with reference to the drawings. The drawings are schematic.
Figures 1 shows a heat exchange chamber of the heat exchange system.
Figure 2 shows a temperature distribution of the heat exchange chamber of figure 1 in a charging mode.
Figure 3 shows the heat exchange system in a charging mode.
Figure 4 shows the heat exchanges system in a discharging mode.

### DESCRIPTION OF A PREFERRED EMBODIMENT

Core of this invention is a heat exchange system 1 with a heat exchange chamber 11 on a high temperature level, which will be charged and discharged with heat via a heat transfer fluid 13. Heat is stored in the heat storage material 121.

The temperature level of the stored heat is significantly higher compared to methods applied so far to increase the efficiency. The temperature level lies between 300 °C and 1000 °C, preferably between 500 °C and 1000 °C, more preferably between 650 °C and 1000 °C and most preferably between 700 °C and 1000 °C. The thermal capacity of the heat exchange system 1 lies in the range between 0.3 GWh and 100 GWh, which causes a thermal power of 50 MW.

The heat exchange system 1 comprises at least one heat exchange chamber 11 with heat exchange chamber boundaries 111 which surround at least one heat exchange chamber interior 112 of the heat exchange chamber 11. The heat exchange chamber 11 is a horizontal heat exchange chamber 113.

The heat exchange chamber boundaries 111 comprise at least one first opening 1111 for guiding in an inflow 132 of at least one heat transfer fluid 131 into the heat exchange chamber interior 112 and at least one second opening 1112 for guiding an outflow 133 of the heat transfer fluid 131 out of the heat exchange chamber interior 112. At least one heat storage material 121 is arranged in the heat exchange chamber interior 112 such that a heat exchange flow 13 of the heat transfer fluid 131 through the heat exchange chamber interior 112 causes a heat exchange between the heat storage material 121 and the heat transfer fluid 131.

The heat exchange chamber 11 is at least partly integrated in the earth. An alternative embodiment of the heat exchange system comprises a completely integrated heat exchange chamber. Alternatively, the heat exchange chamber is located on the surface of the earth.

The heat exchange system 1 is equipped with at least one heat status 12 determining device. This device comprises a number of temperature measuring devices 1500. These temperature measuring devices are distributed mainly in the heat exchange chamber 11. Alternatively or in addition, these devices are located in the inflow 132 and in the outflow 133 of the heat transfer fluid 13. For the case that an electrical heating, e.g. a resistance heater is used as charging unit, these devices are preferably located downstream to the electrical heating and upstream to the electrical heating. By this measure a distortion of the results due to loss of heat can be avoided.

Exemplarily, the heat exchange chamber length of the horizontal heat exchange chamber 11 is about 200 m, the heat exchange chamber height of the heat exchange chamber 11 is about 10 m and the heat exchange chamber width of the heat exchange chamber is about 50 m.

With the aid of the proposed heat exchange system thermal energy can be stored on a high temperature level. The stored thermal energy can be used during the discharging mode of the heat exchange system for the production of steam in a water steam cycle for reconversion into electrical energy. Therefore, one or several heat exchange chambers filled with solid heat storage material are used. The solid heat storage material comprises stones. Alternatively, sand is used.

There is a transition area 116 of the heat exchange chamber 11 with a tapering profile 1161. Thereby an opening diameter 1113 of the opening 1111 or 1112 aligns to a first tapering profile diameter 1162 of the tapering profile 1161 and a chamber diameter 117 of the heat exchange chamber 11 aligns to a second tapering profile diameter 1163 of the tapering profile 1161.

The inflow 132 of the heat transfer fluid 13 is guided into the heat exchange chamber interior 112. The guided inflow 132 is distributed to a wide area of heat storage material 121. By this measure a capacity of the heat exchange unit (heat storage material 121 which is located in the heat exchange chamber interior 112) can be utilized in an advantageous manner.

The transition area 116 is short. The short transition area 116 projects into the heat exchange chamber 11. The result is a short transition channel for the guiding of the inflow 132 into the heat exchange chamber interior 112 of the heat exchange chamber 11.

The heat exchange system 1 is additionally equipped with at least one flow adjusting element 134 for adjusting a mass flow of the heat exchange flow 13 of the heat transfer fluid 131 through the heat exchange chamber interior 112 depending on a heat charge status of the heat exchange system 1. The flow adjusting element 134 is an active fluid motion device 1341 like a blower or a pump. Such a device enables a transportation of the heat transfer fluid 131 through the heat exchange chamber interior 112 of the heat exchange chamber 11. The blower or the pump can be installed upstream or downstream of to the heat exchange chamber 11.

Moreover, the heat exchange system 1 is equipped with a flow meter 1500 for determining the mass flow 13 of the heat transfer fluid 131 through the heat exchange chamber interior 112. The flow meter 1500 is a part of a calorimetric flow meter.

Alternatively, the flow meter comprises temperature measuring devices before entering of the heat transfer fluid into the heat exchange chamber interior and after the leaving of the heat transfer fluid the heat exchange chamber interior. With the temperature difference and the knowledge of the power consumption of the charging unit the consumption of the heat charging unit can be kept constant.

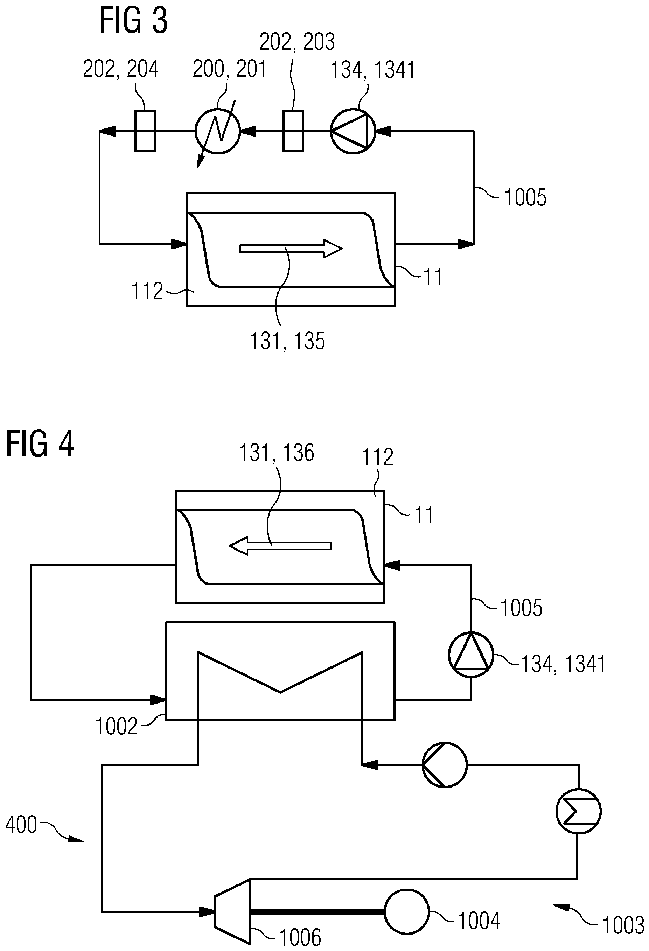

For the charging mode the downstream installation (installation of the flow adjusting element at the cold end of the heat exchange system) is advantageous (figure 3): Relatively cold heat transfer fluid passes the flow adjusting element after releasing of heat to the heat storage material.

In the charging mode, the heat transfer fluid 131 enters the heat exchange chamber 11 through a diffuser 1164. The diffuser 1164 comprises stones 1165 and is arranged at the transition area 116 of the heat exchange chamber 11. The flow of the heat transfer fluid is directed in the charging mode direction 135.

The heat charge status of the heat exchange system 1 is monitored. Based on the monitored heat charge status an intensity of the exchanged heat is controlled with the aid of the flow adjusting element. In addition, by a proper controlling system it is possible, based on the monitoring and adjusting of the mass flow of the heat transfer fluid trough the heat exchange chamber, to keep the energy consumption of the charging unit during the charging mode of the heat exchange system approximately constant.

In a discharging mode the upstream installation of the flow adjusting element is advantageous, too (figure 4): Relatively cold heat transfer fluid passes the flow adjusting element.

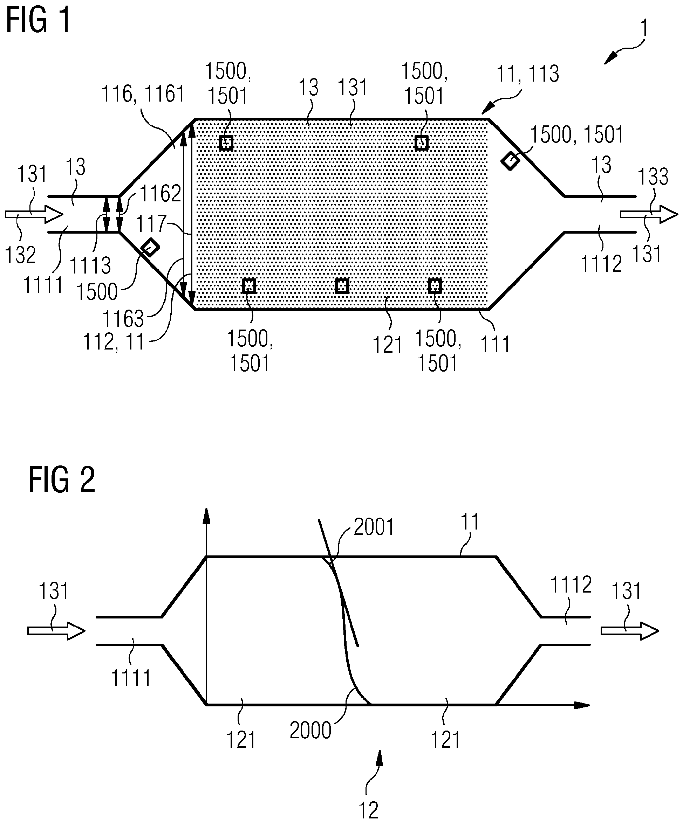

For the charging mode, the heat transfer fluid 131 is heated up by the electrical heating device 201 (charging unit 200). This charged (heated) heat transfer fluid is guided into the heat exchange chamber interior 112 of the heat exchange chamber 11 for charging of the heat storage material. Thereby the heat exchange between the heat transfer fluid and the heat storage material takes place. With reference 2000 the temperature front at a certain time of this charging process is shown (figure 2). In addition, the temperature gradient 2001 which results in the temperature front is depicted.

For the discharging mode the heat exchange system 1 comprises one or several heat exchange chambers 11 mentioned above, an active fluid motion device 1341 to circulate the heat transfer fluid 131 and a thermal machine for re-electrification, which can be a water/steam cycle 1003. The working fluid of this cycle is water and steam. The water/steam cycle 1003 has the function of a discharging unit 400. Essential components of the steam turbine cycle 1003 are a steam turbine 1006 and a generator 1004.

In the discharging mode, the heat exchange flow of the heat transfer fluid is directed into the discharging mode direction 136. Figures 3 and 4 depict relevant components of the charging mode and the discharging mode. These figures refer to a heat exchange system with the same heat exchange chamber 11.

With the aid of the heat exchange system (heat exchanger) 1002 heat of the heat transfer fluid is transferred to the working fluid of the steam cycle 1003.

The heat exchange system 1 comprises a closed loop 1005. Heat exchange fluid which has passed the heat exchange chamber interior 112 is guided back into the heat exchange chamber interior 112.

Following aspect concerning one of the embodiments is to be mentioned:
During the charging mode a temperature of the heat transfer fluid upstream of charging unit 200 and a temperature of the heat transfer fluid downstream of the charging unit 200 are measured with the aid of temperature measuring devices 203 and 204. The temperature measuring devices 203 and 204 are parts of a calorimetric flow meter 202.

The temperature of the heat transfer fluid downstream of the heat exchange chamber interior rises towards the end of the charging cycle. Due to the rise of the temperature of the heat transfer fluid a mass flow of the heat transfer fluid has to be increased for a constant power taking of the charging unit. The constant power taking of the charging unit is controlled such that the temperature of the heat transfer fluid after passing the charging unit is approximately constant (for instance at 600° C). This has the advantage to protect the charging unit.

In order to vary the mass flow the flow adjusting element, e.g. a blower, is used.

## Claims

1. Heat exchange system (1), with
- at least one heat exchange chamber (11) with heat exchange chamber boundaries (111) which surround at least one heat exchange chamber interior (112) of the heat exchange chamber (11) and
- at least one charging unit (200) for heating the heat transfer fluid (131),
wherein
- the heat exchange chamber boundaries (111) comprise at least one first opening (1111) for guiding in an inflow (131) of at least one heat transfer fluid (131) into the heat exchange chamber interior (112) and at least one second opening (1112) for guiding out an outflow (133) of the heat transfer fluid (131) out of the heat exchange chamber interior (112);
- at least one heat storage material (121) is arranged in the heat exchange chamber interior (112) such that a heat exchange flow (13) of the heat transfer fluid (131) through the heat exchange chamber interior (112) causes a heat exchange between the heat storage material (121) and the heat transfer fluid (131);
- the heat exchange system (1) is equipped with at least one flow adjusting element (134) for adjusting a mass flow of the heat exchange flow (13) of the heat transfer fluid (131) through the heat exchange chamber interior (112) depending on a heat charge status (12) of the heat exchange system (1); **characterised in that** the heat exchange system (1) is arranged such that an energy consumption of the heat exchange system (1) during a charging mode is kept approximately constant.

2. Heat exchange system according claim 1, which is equipped with at least one heat charge status determining device (1500) for determining the heat charge status of the heat exchange system (1).

3. Heat exchange system according to claim 2, wherein the heat charge status determining device (1500) comprises at least one temperature measuring device (1501) for measuring at least one temperature of the heat exchange system (1).

4. Heat exchanges system according to claim 3, wherein the temperature is selected from the group consisting of temperature of the inflow (132) of the heat transfer fluid (131) and temperature of the outflow (133) of the heat transfer fluid (131).

5. Heat exchange system according to one of the claims 1 to 4, which is equipped with at least one flow meter (1500) for determining the mass flow of the heat transfer flow of the heat transfer fluid through the heat exchange chamber interior (112) and/or for determining a mass flow of the inflow (132) of the heat transfer fluid (131) into the heat exchange chamber interior (112) and/or for determining a mass flow of the outflow (133) of the heat transfer fluid (131) out of the heat exchange chamber interior (112).

6. Heat exchange system according to one of the claims 1 to 5, wherein the flow adjusting element (134) comprises at least one active fluid motion device (1341) which is selected from the group consisting of blower, fan and pump and/or the flow adjusting element comprises at least one passive fluid control device which is selected from the group consisting of activatable bypass pipe, nozzle, flap, damper and valve.

7. Heat exchange system according to one of the claims 1 to 6, wherein the heat transfer fluid (131) comprises a gas at ambient gas pressure.

8. Heat exchange system according to claim 7, wherein the gas at the ambient pressure is air.

9. Heat exchange system according to one of the claims 1 to 8, wherein the system is equipped with a calorimetric flow meter (202) which comprises upstream and downstream of the charging unit (200) temperature measuring devices (203, 204).

10. Heat exchange system according to one of the claims 1 to 9, wherein the charging unit (200) comprises at least one electrical heating device (201) which is selected from the group consisting of resistance heater, inductive heater, emitter of electromagnetic radiation and heat pump.

11. Heat exchange system according to one of the claims 1 to 10, wherein the heat exchange system (1) is equipped with at least one discharging unit (400) for discharging the heat transfer fluid (131) of the outflow (133) from heat for production of electricity.

12. Heat exchange system according to one of the claims 1 to 11 with a closed loop (1005), wherein the inflow (132) comprises the outflow (133).

13. Method for exchanging heat by using the heat exchange system according to one of the claims 1 to 12, wherein
- in an operating mode of the heat exchange system (1) the heat exchange flow (13) of the heat transfer fluid (131) is guided through the heat exchange chamber interior (112), wherein a heat exchange between the heat storage material (121) and the heat transfer fluid (131) is caused;
- a mass flow of the heat exchange flow (13) of the heat transfer fluid (131) is adjusted dependent on the heat charge status of the heat exchange system (1); and
- in case the operating mode is the charging mode a charging unit (200) for heating the heat transfer fluid (131) is used and an energy consumption of the heat exchange system (1) during the charging mode is kept approximately constant.

14. Method according to claim 13, wherein, in case the operating mode is the discharging mode,
- for the discharging mode a discharging unit (400) for removing heat from the heat transfer fluid (131) is used; and
- an electricity production of the discharging unit (400) during the discharging mode is kept approximately constant.

## Patentansprüche

1. Wärmeaustauschsystem (1) mit
- mindestens einer Wärmeaustauschkammer (11) mit Wärmeaustauschkammerbegrenzungen (111), die mindestens einen Wärmeaustauschkammerinnenraum (112) der Wärmeaustauschkammer (11) umgeben, und
- mindestens einer Zufuhreinheit (200) zum Erwärmen des Wärmeübertragungsmediums (131),
wobei
- die Wärmeaustauschkammerbegrenzungen (111) mindestens eine erste Öffnung (1111) zum Einleiten eines Zuflusses (131) mindestens eines Wärmeübertragungsmediums (131) in den Wärmeaustauschkammerinnenraum (112) und mindestens eine zweite Öffnung (1112) zum Ausleiten eines Abflusses (133) des Wärmeübertragungsmediums (131) aus dem Wärmeaustauschkammerinnenraum (112) umfassen,
- mindestens ein Wärmespeichermaterial (121) so in dem Wärmeaustauschkammerinnenraum (112) angeordnet ist, dass ein Wärmeaustauschfluss (13) des Wärmeübertragungsmediums (131) durch den Wärmeaustauschkammerinnenraum (112) für einen Wärmeaustausch zwischen dem Wärmespeichermaterial (121) und dem Wärmeübertragungsmedium (131) sorgt,
- das Wärmeaustauschsystem (1) mit mindestens einem Durchflusseinstellelement (134) zum Einstellen eines Massenstroms des Wärmeaustauschflusses (13) des Wärmeübertragungsmediums (131) durch den Wärmeaustauschkammerinnenraum (112) in Abhängigkeit von einem Wärmeladungszustand (12) des Wärmeaustauschsystems (1) ausgestattet ist,
**dadurch gekennzeichnet, dass**
das Wärmeaustauschsystem (1) so angeordnet ist, dass ein Energieverbrauch des Wärmeaustauschsystems (1) in einem Ladezustand in etwa konstant gehalten wird.

2. Wärmeaustauschsystem nach Anspruch 1,
das mit mindestens einer Wärmeladungszustand-Bestimmungsvorrichtung (1500) zum Bestimmen des Wärmeladungszustandes des Wärmeaustauschsystems (1) ausgestattet ist.

3. Wärmeaustauschsystem nach Anspruch 2,
wobei die Wärmeladungszustand-Bestimmungsvorrichtung (1500) mindestens eine Temperaturmessvorrichtung (1501) zum Messen mindestens einer Temperatur des Wärmeaustauschsystems (1) umfasst.

4. Wärmeaustauschsystem nach Anspruch 3,
wobei die Temperatur aus der Gruppe ausgewählt ist, die aus der Temperatur des Zuflusses (132) des Wärmeübertragungsmediums (131) und der Temperatur des Abflusses (133) des Wärmeübertragungsmediums (131) besteht.

5. Wärmeaustauschsystem nach einem der Ansprüche 1 bis 4, das mit mindestens einem Durchflussmesser (1500) zum Bestimmen des Massenstroms des Wärmeübertragungsflusses des Wärmeübertragungsmediums durch den Wärmeaustauschkammerinnenraum (112) und/oder zum Bestimmen eines Massenstroms des Zuflusses (132) des Wärmeübertragungsmediums (131) in den Wärmeaustauschkammerinnenraum (112) und/oder zum Bestimmen eines Massenstroms des Abflusses (133) des Wärmeübertragungsmediums (131) aus dem Wärmeaustauschkammerinnenraum (112) ausgestattet ist.

6. Wärmeaustauschsystem nach einem der Ansprüche 1 bis 5,
wobei das Durchflusseinstellelement (134) mindestens eine aktive Medienumwälzvorrichtung (1341) umfasst, die aus der Gruppe ausgewählt ist, welche aus einem Gebläse, einem Ventilator und einer Pumpe besteht, und/oder das Durchflusseinstellelement mindestens eine passive Fluidregelvorrichtung umfasst, die aus der Gruppe ausgewählt ist, welche aus einer aktivierbaren Bypassleitung, Düse, Drossel, Klappe und einem aktivierbaren Ventil besteht.

7. Wärmeaustauschsystem nach einem der Ansprüche 1 bis 6,
wobei das Wärmeaustauschmedium (131) ein Gas auf Umgebungsgasdruck umfasst.

8. Wärmeaustauschsystem nach Anspruch 7,
wobei es sich bei dem Gas auf Umgebungsdruck um Luft handelt.

9. Wärmeaustauschsystem nach einem der Ansprüche 1 bis 8, wobei das System mit einem kalorimetrischen Durchflussmesser (202) ausgestattet ist, der vor und hinter der Zufuhreinheit (200) Temperaturmessvorrichtungen (203, 204) umfasst.

10. Wärmeaustauschsystem nach einem der Ansprüche 1 bis 9, wobei die Zufuhreinheit (200) mindestens eine elektrische Heizvorrichtung (201) umfasst, die aus der Gruppe ausgewählt ist, welche aus einer Widerstandsheizung, einer Induktionsheizung, einem Strahler für elektromagnetische Strahlung und einer Wärmepumpe besteht.

11. Wärmeaustauschsystem nach einem der Ansprüche 1 bis 10, wobei das Wärmeaustauschsystem (1) mit mindestens einer Abfuhreinheit (400) zum Abführen von Wärme aus dem Wärmeübertragungsmedium (131) des Abflusses (133) zwecks Stromerzeugung ausgestattet ist.

12. Wärmeaustauschsystem nach einem der Ansprüche 1 bis 11 mit geschlossenem Kreislauf (1005),
wobei der Zufluss (132) den Abfluss (133) umfasst.

13. Verfahren zum Austauschen von Wärme durch Verwenden des Wärmeaustauschsystems nach einem der Ansprüche 1 bis 12, wobei
- der Wärmeaustauschfluss (13) des Wärmeübertragungsmediums (131) in einem Betriebsmodus des Wärmeaustauschsystems (1) durch den Wärmeaustauschkammerinnenraum (112) geleitet wird, wobei ein Wärmeaustausch zwischen dem Wärmespeichermaterial (121) und dem Wärmeübertragungsmedium (131) veranlasst wird,
- ein Massenstrom des Wärmeaustauschflusses (13) des Wärmeübertragungsmediums (131) in Abhängigkeit vom Wärmeladungszustand des Wärmeaustauschsystems (1) eingestellt wird und
- falls es sich beim Betriebsmodus um den Lademodus handelt, eine Zufuhreinheit (200) zum Erwärmen des Wärmeübertragungsmediums (131) verwendet und ein Energieverbrauch des Wärmeaustauschsystems (1) im Lademodus in etwa konstant gehalten wird.

14. Verfahren nach Anspruch 13, wobei in dem Fall, dass es sich bei dem Betriebsmodus um den Entlademodus handelt,
- eine Abfuhreinheit (400) zum Ableiten von Wärme aus dem Wärmeübertragungsmedium (131) für den Entlademodus verwendet wird und
- eine Stromerzeugung der Entladeeinheit (400) im Entlademodus in etwa konstant gehalten wird.

## Revendications

1. Système d'échange thermique (1), avec
- au moins une chambre d'échange thermique (11), avec des limites de chambre d'échange thermique (111) qui entourent au moins un intérieur de chambre d'échange thermique (112) de la chambre d'échange thermique (11) et
- au moins une unité de charge (200) permettant de chauffer le fluide de transfert thermique (131),
dans lequel
- les limites de chambre d'échange thermique (111) comprennent au moins une première ouverture (1111) permettant de guider un flux en entrée (131) d'au moins un fluide de transfert thermique (131) dans l'intérieur de chambre d'échange thermique (112) et au moins une seconde ouverture (1112) permettant de guider un flux en sortie (133) du fluide de transfert thermique (131) hors de l'intérieur de chambre d'échange thermique (112) ;
- au moins un matériau de stockage de chaleur (121) est agencé à l'intérieur de la chambre d'échange thermique (112) de sorte qu'un flux d'échange thermique (13) du fluide de transfert thermique (131) à travers l'intérieur de la chambre d'échange thermique (112) provoque un échange thermique entre le matériau de stockage de chaleur (121) et le fluide de transfert thermique (131) ;
- le système d'échange thermique (1) est équipé d'au moins un élément de réglage d'écoulement (134) permettant d'ajuster un débit massique du flux d'échange thermique (13) du fluide de transfert thermique (131) à travers l'intérieur de chambre d'échange thermique (112) en fonction d'un état de charge thermique (12) du système d'échange thermique (1) ;
**caractérisé en ce que**
le système d'échange thermique (1) est agencé de sorte qu'une consommation d'énergie du système d'échange thermique (1) pendant un mode de charge est maintenue approximativement constante.

2. Système d'échange thermique selon la revendication 1, qui est équipé d'au moins un dispositif de détermination de l'état de charge thermique (1500) permettant de déterminer l'état de charge thermique du système d'échange thermique (1).

3. Système d'échange thermique selon la revendication 2, dans lequel le dispositif de détermination de l'état de charge thermique (1500) comprend au moins un dispositif de mesure de température (1501) permettant de mesurer au moins une température du système d'échange thermique (1).

4. Système d'échange thermique selon la revendication 3, dans lequel la température est sélectionnée dans le groupe constitué de la température du flux en entrée (132) du fluide de transfert thermique (131) et de la température du flux en sortie (133) du fluide de transfert thermique (131).

5. Système d'échange thermique selon l'une des revendications 1 à 4, qui est équipé d'au moins un débitmètre (1500) permettant de déterminer le débit massique du flux de transfert thermique du fluide de transfert thermique à travers l'intérieur de la chambre d'échange thermique (112) et/ou permettant de déterminer un débit massique du flux en entrée (132) du fluide de transfert thermique (131) à l'intérieur de la chambre d'échange thermique (112) et/ou permettant de déterminer un débit massique du flux en sortie (133) du fluide de transfert thermique (131) hors de l'intérieur de la chambre d'échange thermique (112).

6. Système d'échange thermique selon l'une des revendications 1 à 5, dans lequel l'élément de réglage de débit (134) comprend au moins un dispositif de mouvement de fluide actif (1341) qui est sélectionné dans le groupe constitué d'un souffleur, d'un ventilateur et d'une pompe et/ou l'élément de réglage de débit comprend au moins un dispositif de contrôle de fluide passif qui est sélectionné dans le groupe constitué d'un tuyau de dérivation activable, d'une buse, d'un volet, d'un amortisseur et d'une vanne.

7. Système d'échange thermique selon l'une des revendications 1 à 6, dans lequel le fluide de transfert thermique (131) comprend un gaz à une pression ambiante de gaz.

8. Système d'échange thermique selon la revendication 7, dans lequel le gaz à la pression ambiante est l'air.

9. Système d'échange thermique selon l'une des revendications 1 à 8, dans lequel le système est équipé d'un débitmètre calorimétrique (202) qui comprend en amont et en aval de l'unité de charge (200) des dispositifs de mesure de la température (203, 204).

10. Système d'échange thermique selon l'une des revendications 1 à 9, dans lequel l'unité de charge (200) comprend au moins un dispositif de chauffage électrique (201) qui est sélectionné dans le groupe constitué d'un chauffage à résistance, d'un chauffage inductif, d'un émetteur de rayonnement électromagnétique et d'une pompe à chaleur.

11. Système d'échange thermique selon l'une des revendications 1 à 10, dans lequel le système d'échange thermique (1) est équipé d'au moins une unité de décharge (400) permettant de décharger le fluide de transfert thermique (131) du flux en sortie (133) de la chaleur pour la production d'électricité.

12. Système d'échange thermique selon l'une des revendications 1 à 11, avec un circuit fermé (1005), dans lequel le flux en entrée (132) comprend le flux en sortie (133).

13. Procédé d'échange de chaleur en utilisant le système d'échange thermique selon l'une des revendications 1 à 12, dans lequel
- dans un mode de fonctionnement du système d'échange thermique (1), le flux d'échange thermique (13) du fluide de transfert thermique (131) est guidé à travers l'intérieur de la chambre d'échange thermique (112), dans lequel un échange thermique entre le matériau de stockage de chaleur (121) et le fluide de transfert thermique (131) est provoqué ;
- un débit massique du flux d'échange thermique (13) du fluide de transfert thermique (131) est ajusté en fonction de l'état de charge thermique du système d'échange thermique (1) ; et
- si le mode de fonctionnement est le mode de charge, une unité de charge (200) permettant de chauffer le fluide de transfert thermique (131) est utilisée et une consommation d'énergie du système d'échange thermique (1) pendant le mode de charge est maintenue approximativement constante.

14. Procédé selon la revendication 13, dans lequel, si le mode de fonctionnement est le mode de décharge,
- pour le mode de décharge, une unité de décharge (400) permettant de supprimer la chaleur du fluide de transfert thermique (131) est utilisée ; et
- une production d'électricité de l'unité de décharge (400) pendant le mode de décharge est maintenue approximativement constante.
